**Europäisches Patentamt**

**European Patent Office**

**Office européen des brevets**

(19)

(11) Veröffentlichungsnummer: **0 185 235**
**B1**

(12) **EUROPÄISCHE PATENTSCHRIFT**

(45) Veröffentlichungstag der Patentschrift:
21.06.89

(51) Int. Cl.⁴: **C 07 F 9/10**

(21) Anmeldenummer: **85115167.0**

(22) Anmeldetag: **29.11.85**

(54) Verfahren zur Isolierung von Lysophosphatidylcholin-freiem Phosphatidylcholin aus Ei-Pulver.

(30) Priorität: **17.12.84 DE 3445950**

(43) Veröffentlichungstag der Anmeldung:
**25.06.86 Patentblatt 86/26**

(45) Bekanntmachung des Hinweises auf die Patenterteilung:
**21.06.89 Patentblatt 89/25**

(84) Benannte Vertragsstaaten:
**AT BE CH DE FR GB IT LI LU NL SE**

(56) Entgegenhaltungen:
**EP-A-0 004 848**

**CHEMICAL ABSTRACTS, Band 88, Nr. 3, 16. Januar 1978, Seite 266, abstract Nr. 18472g, Columbus, Ohio, US; R.S. FAGER et al.: "A large-scale purification of phosphatidylethanolamine, lysophosphatidylethanolamine, and phosphatidylcholine by high performance liquid chromatography: a partial resolution of molecular species", & J. LIPID RES. 1972, 18(6), 704-709 CHEMICAL ABSTRACTS, Band 89, Nr. 25, 18. Dezember 1978, Seite 259, abstract no. 211361u, Columbus, Ohio, US; RADIN et al.: "The preparative isolation of lecithin", & J. LIPID RES. 1978, 19(7), 922-924**

(73) Patentinhaber: **A. Nattermann & Cie. GmbH, Nattermannallee 1, D-5000 Köln 30 (DE)**

(72) Erfinder: **Günther, Bernd-Rainer, Dr., Auf der Höhe 31, D-5010 Bergheim (DE)**

(74) Vertreter: **Redies, Bernd, Dr. rer. nat., COHAUSZ & FLORACK Patentanwaltsbüro Schumannstrasse 97 Postfach 14 01 20, D-4000 Düsseldorf 1 (DE)**

## Beschreibung

Die Erfindung betrifft ein neues Verfahren zur Isolierung von reinem 1,2-Diacyl-glycero-3-phosphocholin (Phosphatidylcholin), welches frei von Lysophospholipiden ist, durch Chromatographie einer Ei-Pulver-Extraktlösung an Kieselgel.

Phospholipide finden u. a. in der Lebensmittelindustrie, Tierernährung, Kosmetik und Pharmazie Anwendung. In der Pharmazie wird reines Phosphatidylcholin als Wirkstoff und Hilfsstoff, wie zum Beispiel als Emulgator zur Herstellung parenteral zu applizierender Fettemulsionen sowie zur Herstellung von Liposomen, eingesetzt. Insbesondere für die parenterale Anwendung wird überwiegend Ei-Phosphatidylcholin, welches frei von hämolytisch wirkenden Lysophospholipiden sein soll, verwendet.

Bei der Herstellung bzw. Gewinnung von Ei-Phospholipiden geht man vom Rohdotter aus, welcher ca. folgende Zusammensetzung besitzt:

50 % Wasser
31 % Ei-Lipide
16 % Proteine
 3 % Ascheanteile

Der Ei-Lipid-Anteil besteht aus Neutrallipiden (Triglyceride, Cholesterin und gl.) und den Phospholipiden. Die Isolierung des Ei-Lipid-Anteils erfolgt durch direkte Extraktion des Eidotters z. B. mit Dimethylether (DE-PS-2 833 371) oder durch Extraktion des getrockneten Eidotters (Eigelb-Pulver).

Bevorzugt wird für die Gewinnung der Phospholipide das getrocknete Eigelb eingesetzt, welches ca. folgende Zusammensetzung besitzt:

32 % Proteine
50 % Triglyceride/Cholesterin
18 % Phospholipide

Die Phospholipide werden bevorzugt durch Extraktion mit Petrolether, Ether, Chloroform, Methanol oder Ethanol und Ausfällen mit Aceton gewonnen: USP-2 013 804, DE-PS-260 886, DE-PS-261 212, DE-PS-272 057, DE-PS-487 335, Jap koka; 7 961 200. Der Phospholipid-Anteil besteht nach K. Orsinger, Seifen-Öle-Fette-Wachse 109, 495 - 499 (1983) aus:

73 %     Phosphatidylcholin (PC)
5 - 6 %   Lysophosphatidylcholin (LPC)
15 %     Phosphatidylethanolamin (PE)
2 - 3 %   Lysophosphatidylethanolamin (LPE)
1 %     Phosphatidylinosit (PI)
2 - 3 %   Sphingomyelin (SHA)
1 %     Plasmalogen (PLA)

Dieses Phospholipidgemisch wird auch als reines Ei-Lecithin bezeichnet, P.H. List et al., Pharmazeutische Verfahrenstechnik heute 1 (7) 1 - 8 (1980). Dieses Ei-Lecithin findet in der Nahrungsmittelindustrie und Pharmazie Anwendung.

Die Auftrennung dieses Phospholipidgemisches in die einzelnen Phospholipide ist sehr aufwendig und wird deshalb im großen Maßstab nicht durchgeführt, obwohl insbesondere reines, Lysophospholipid-freies Phosphatidylcholin insbesondere für die Anwendung in der Pharmazie wünschenswert wäre. Bekannt sind eine Reihe von aufwendigen Labormethoden zur Gewinnung von reinem Phosphatidylcholin. So wird z. B. nach M. Marsh et al., Clinica Chimica Acta 43, 87 - 90 (1973), Lysophosphatidylcholin-freies Phosphatidylcholin über eine aufwendige doppelte Säulenchromatographie, bei welchem unter anderem eine Gradientenelution durchgeführt wird, wobei für die Pharmazie toxikologisch bedenkliche Lösungsmittelgemische wie Chloroform/Methanol eingesetzt werden. Die Wiedergewinnung der Lösungsmittel (azeotrope Gemische) ist unmöglich.

N.S. Radin, J. Lipid Res. 13, 922 - 924, geht von Eilecithin aus. Das Eilecithin wird in Ethanol gelöst und über eine Aluminiumchromatographie-Säule gegeben und mit Ethanol eluiert, wobei Phosphatidylethanolamin abgetrennt wird. Das eingedampfte Eluat, welches Phosphatidylcholin, Lysophosphatidylcholin, Sphingomylin und Neutrallipide enthält, wird in einem Lösungsmittelgemisch aus Hexan, Isopropanol und Wasser gelöst und auf eine $SiO_2$-Säule gegeben und mit dem gleichen Lösungsmittelgemisch eluiert, wobei eine Ausbeute von 40 - 43 % erzielt werden konnte. Es wird zwar ein Phosphatidylcholin mit geringen Verunreinigungen an Lyso-Phosphatidylcholin und Sphingomylin erhalten, jedoch ist dies nur über ein aufwendiges Verfahren mit vier Stufen und dazu noch mit vier verschiedenen Lösungsmitteln bzw. Lösungsmittelgemischen möglich. Darüber hinaus beträgt bei dieser Verfahrensweise der Phosphatidylcholin-Wirkungsgrad nur 44 % bezogen auf das eingesetzte Eipulver.

Der vorliegenden Errindung liegt die Aufgabe zugrunde, ein einfaches Verfahren zur Isolierung von hochreinem, Lysophospholipid-freiem Phosphatidylcholin direkt aus Eipulver zu entwickeln.

2

Es wurde nun überraschenderweise gefunden, daß man hochreines, Lysophospholipid-freies Phosphatidylcholin gewinnen kann, indem man Eipulver durch Extraktion mit einem Lösungsmittelgemisch aus Petrolether, Propanol-2 und Wasser und anschließender Kieselgel-Säulenchromatographie des Extraktes mit demselben Lösungsmittelgemisch gewinnen kann.

Das erfindungsgemäße Verrahren ist dadurch gekennzeichnet, daß man das Ei-Pulver mit einem Lösungsmittelgemisch aus 1 Vol.-Teil Leichtbenzin (65-73°C)/1 Vol.-Teil Propanol-2 und 0,175 Vol.-Teilen Wasser extrahiert, die Extraktphase bei einer Temperatur im Bereich von 20 - 50°C auf eine mit Kieselgel gefüllte Säule gibt, bei dieser Temperatur mit dem gleichen Lösungsmittelgemisch eluiert und dabei im Hauptlauf ein Lysophospholipid-freies Phosphatidylcholin erhält. Im Vorlauf werden u.a. Triglyceride, Cholesterin und Phosphatidylethanolamin, im Hauptlauf Phosphatidylcholin und im Nachlauf Lysophosphatidylcholin und Sphingomyelin aufgefangen. Aus dem Vorlauf kann das Phosphatidylethanolamin nach bekannten Verfahren in reiner Form isoliert werden.

Vorzugsweise wird die Extraktion 10 bis 20 Minuten bei 20 bis 50°C durchgeführt.

Als Ausgangsmaterial können auch vorgereinigte Eiphospholipide, z. B. entölte, eingesetzt werden.

Als Kieselgel können übliche Produkte für die Chromatographie verschiedener Körnung oder auch gepreßtes Kieselgel, welches aktiviert oder desaktiviert sein kann, eingesetzt werden. Bevorzugt werden neutrale Kieselgel-Produkte verwendet.

Das erfindungsgemäße Verfahren kann bei Normaldruck oder auch Oberdruck bei Temperaturen die druckseitig gestattet sind, vorzugsweise 20 - 25°C, durchgeführt werden.

Ein ganz besonderer Vorteil des erfindungsgemäßen Verfahrens besteht darin, daß man das Kieselgel nach erfolgter Chromatographie immer wieder einsetzen kann. Sämtliche Verunreinigungen werden im Vorlauf bzw. Nachlauf aufgefangen. Auf den Nachlauf kann zudem verzichtet werden, da bei Neubeaufschlagung der Säule die dort befindlichen Verunreinigungen in den nächsten Vorlauf eluiert werden.

Ein weiterer Vorteil liegt in der Verwendung nur eines, leicht redestillierbaren Lösungsmittelgemisches für die Extraktion und säulenchromatographische Auftrennung.

Im Vergleich mit bekannten Verfahren zeichnet sich das neue Verfahren durch eine wesentlich einfachere Verfahrensweise aus. Das Phosphatidylcholin wird mit 92-%-igem Wirkungsgrad bezogen auf Ei-Pulver gewonnen. Es werden in einer säulenchromatographischen Trennung mit 200 g Kieselgel 90 g Ei-Lipide aufgetrennt, wobei nur 4,2 l Gesamteluat notwendig sind. Das Verfahren hat eher den Charakter einer Filtration als einer säulenchromatographischen Reinigung im üblichen Sinn.

Das nachstehende Beispiel soll die Erfindung näher erläutern, ohne sie jedoch zu beschränken.

## Analytik

Die Phosphatide wurden auf dünnschichtchromatographischem Weg analysiert. Der Ölgehalt wurde dem Dialysierbaren gleichgesetzt.

## Säulenchromatographie, Lösungsmittelgemisch

Es wurde eine Chromatographiesäule mit einem Innendurchmesser von 4,5 cm und einer Höhe von 37 cm eingesetzt.

Die Säule wurde mit einer Aufschlämmung von 200 g Kieselgel (Merck) in einem Lösungsmittelgemisch aus Leichtbenzin (65-73°C)/2-Propanol/Wasser im Verhältnis 1/1/0,175 (v/v/v) gefüllt. Das gleiche Lösungsmittelgemisch wurde zur Extraktion von Ei-Pulver und zur Elution eingesetzt. Nach erfolgter Chromatographie kann das Kieselgel wieder benutzt werden.

## Ausgangsmaterial

Es wurde handelsübliches Ei-Pulver mit folgender Zusammensetzung:

11 % Phosphatidylcholin
4 % Sphingomyelin
3 % Phosphatidylethanolamin
1,5 % Lysophosphatidylcholin
0,5 % sonst. Phospholipide
48 % Neutrallipide/Cholesterin
32 % Proteine

**Beispiel 1**

1. Stufe 150 g Ei-Pulver werden mit 300 ml Lösungsmittelgemisch 10 Minuten bei 40°C verrührt. Die Proteine werden abgesaugt und mit wenig Lösungsmittelgemisch nachgewaschen. Man erhält 300 ml Filtrat mit 90 g Ei-Lipiden.

2. Stufe

Das Filtrat wird aut eine mit Kieselgel (200 g) gefüllte Säule gegeben und bei Raumtemperatur mit dem gleichen Lösungsmittelgemisch eluiert.

Das Gesamteluat (5 l) wird in 3 Fraktionen unterteilt. Die Fraktionen werden eingedampft und die Rückstände analysiert.

1. Fraktion 0 - 1,6 l Rückstand: 69 g
Enthält Neutrallipide (inkl. Cholesterin),
PE, LPE, PI, Spuren PC und Spuren SPH

| 2. Fraktion 1,6 l - 4,2 l | Rückstand: 16,1 g |
|---|---|
| PC-Gehalt: | 94 % |
| SPH-Gehalt: | < 2 % |
| LPC-Gehalt: | ⩽ 0,3 % |
| Ölgehalt: | ⩽ 0,5 % |
| Rest: | Lipide, Wasser etc. |
| PC-Wirkungsgrad: | 92 % d.Th. bez. auf Ei-Pulver |

3. Fraktion 4,2 - 5,0 l Rückstand: 4 g
Enthält SPH, LPC und Spuren PC Nach Abnahme der 2. Fraktion können erneut Ei-Lipide beaufschlagt werden, wobei die Produkte der 3. Fraktion mit denen der 1. Fraktion eluiert werden.

**Beispiel 2** (Vergleichsbeispiel)

1. Stufe

Verfahren gemäß Japan kokai 7 961 200.

150 g Ei-Pulver werden mit 1350 ml 95-%-igem Ethanol bei Raumtemperatur verrührt. Nach Abfiltration der unlöslichen Bestandteile und Nachwaschen mit 95-%-igem Ethanol werden die gesammelten Ethanolfiltrate eingedampft.

Feststoffausbeute: 36 g Ei-Lipide

| | |
|---|---|
| Phosphatidylcholin-Gehalt: | 42 % |
| Sphingomyelin-Gehalt: | 3 % |
| Lysophosphatidylcholin-Gehalt: | 2 % |
| Phosphatidylethanolamin-Gehalt: | 8 % |
| Rest: Triglyceride, Cholesterin etc. | |

2. Stufe - gemäß DE-OS-3 047 048

Es wird eine Säulenchromatographie (100 g Kieselgel) bei 65°C unter Verwendung von Ethanol als Elutionsmittel durchgeführt.

| Säulenauftrag: | 36 g Ei-Lipide in 500 ml 95-%-igem Äthanol |
|---|---|
| Elutionsmittel: | 1) 95-%-iges Ethanol für 1,7 l Ersteluat |
| | 2) 80-%-iges Ethanol für 1,2 l Zweiteluat |

Nach 1,7 l Ersteluat werden 1,2 l Zweiteluat aufgefangen. Das Zweiteluat wird eingedampft und analysiert.

Feststoffausbeute: 10,4 g

| | |
|---|---|
| Phosphatidylcholin-Gehalt: | 85 % |
| Sphingomyelin-Gehalt: | 6 % |
| Lysophosphatidylcholin-Gehalt: | 5 % |
| Öl-Gehalt: | 0,5 % |
| Rest: Wasser, Ethanol etc. | |

Phosphatidylcholin-Wirkungsgrad: 54 % d.Th. bez. auf Ei-Pulver

3. Stufe

Die Säule muß vor Wiederbenutzung mit 95-%-igem Ethanol reequilibriert werden.

**Beispiel 3**

<u>Vergleichbeispiel</u>
Verfahren gemäß N.S. Radin, J. Lipid Res. 19, 922 - 924 (1978).

<u>1. Stufe</u>
150 g Ei-Pulver werden mit 1,35 l 95-%-igem Ethanol bei Raumtemperatur extrahiert, das Extrakt abfiltriert und eingedampft. Erhalten werden 36 g Roh-Eilecithin mit folgender Zusammensetzung:

42 % Phosphatidylcholin
 8 % Phosphatidylethanolamin
 2 % Lysophosphatidylcholin
 3 % Sphingomyelin
Rest: Triglyceride, Cholesterin etc.

<u>2. Stufe</u>
10 g dieses Eilecithins werden in abs. Ethanol gelöst und einer Säulenchromatographie mit 100 g $Al_2O_3$ unterzogen. Als Elutionsmittel wird abs. Ethanol verwendet.

Das Eluat wird eingeengt, erhalten wird ein Phospholipidgemisch (5 g) mit folgender Zusammensetzung:

51 % Phosphatidylcholin
 3 % Lysophosphatidylcholin
 5 % Sphingomyelin
Rest: Neutrallipide, Cholesterin etc.

<u>3. Stufe</u>
2,5 g des nach der 2. Stufe gewonnenen Phospholipidgemischs werden in 2,5 ml eines Gemischs aus Hexan/Isopropanol/Wasser (1 : 1,3 : 0,2; v/v/v) gelöst und auf eine mit 100 g Kieselgel gefüllte Säule gegeben. Nach Zugabe weiterer 100 ml des gleichen Lösungsmittelgemischs wird mit 1,4 l eines Gemischs aus Hexan/Isopropanol/Wasser (1 : 1,3 : 0,25; v/v/v) eluiert. Nach dem Vorlauf (Triglyceride/Cholesterin) wird der Hauptlauf aufgefangen und eingedampft.

Rückstand: 1,1 g
Zusammensetzung:
91 % Phosphatidylcholin
 2 % Sphingomyelin
 1 % Lysophosphatidylcholin
 6 % Wasser, Restlösemittel, Triglyceride
PC-Wirkungsgrad: 44 % bez. auf Ei-Pulver

<u>4. Stufe</u>
Die Säule muß vor der Wiederbenutzung mit Hexan/Isopropanol/Wasser (1 : 1,3 : 0,2; v/v/v) reequilibriert werden.
Zusammenfassung:
Ausgangsmaterial: Ei-Pulver

| | Beisp. 1 | Beisp. 2 | Beisp. 3 |
|---|---|---|---|
| Anzahl der notw. Stufen bis zur Kieselgelwiederverw. | 2 | 3 | 4 |
| PC-Wirkungsgrad bez. auf Ei-Pulver: | 92 % | 54 % | 44 % |
| Anzahl der Lösungsmittel bzw. Gemische: | 1 | 2 | 4 |
| PC-Gehalt: | 94 % | 85 % | 91 % |

Wie der Vergleich der Beispiele zeigt, kann nach dem erfindungsgemäßen Verfahren in einfacher Verfahrensweise über 2 Stufen mit nur einem Lösungsmittelgemisch in hoher Ausbeute und Reinheit Phosphatidylcholin gewonnen werden.

**Patentansprüche**

1. Verfahren zur Isolierung von Lysophospholipidfreiem Phosphatidylcholin aus Ei-Pulver, dadurch gekennzeichnet, daß man das Ei-Pulver mit einem Lösungsmittelgemisch aus 1 Vol.-Teil Leichtbenzin (65-73°C)/1 Vol.-Teil Propanol-2 und 0,175 Vol.-Teilen Wasser extrahiert, die Extraktphase bei einer Temperatur im Bereich von 20 - 50°C auf eine mit Kieselgel gefüllte Säule gibt, bei dieser Temperatur mit dem gleichen Lösungsmittelgemisch eluiert und dabei im Hauptlauf reines Phosphatidylcholin erhält.

2. Verfahren gemäß Anspruch 1, dadurch gekennzeichnet, daß man die Extraktion 10 - 20 Minuten bei 20 - 50°C durchführt.


**Claims**

1. A process for isolating phosphatidylcholine free of lysophospholipid from egg powder, characterized in that the egg powder is treated with a solvent mixture of 1 part by volume of light petrol (65 - 73°C), 1 part by volume of propanol-2 and 0,175 part by volume of water, the solution phase is given onto a column filled with silica gel at a temperature in the range from 20 to 50°C, the elution is carried out at that temperature with the same solvent mixture, and pure phosphatidylcholine is isolated from the main run.

2. The process according to claim 1, characterized in that the extraction is carried out for 10 to 20 minutes at 20 to 50°C.


**Revendications**

1. Procédé pour isoler une phosphatidylcholine exempte de lysophospholipides à partir de la poudre d'oeuf, caractérisé en ce que l'on extrait la poudre d'oeuf par un mélange solvant consistant en 1 partie en volume d'essence minérale légère (bouillant de 65 à 73°C)/1 partie en volume de propanol-2 et 0,175 partie en volume d'eau, on jette la phase extrait, à une température dans l'intervalle de 20 à 50°C, sur une colonne garnie de gel de silice, on élue à la même temperature par le même mélange solvant et on obtient ainsi la phosphatidylcholine pure en fraction principale.

2. Procédé selon la revendication 1, caractérisé en ce que l'on effectue l'extraction en 10 à 20 minutes à des temperatures de 20 à 50°C.